# EUROPÄISCHE PATENTSCHRIFT

(11) **EP 3 138 386 B1**
(45) Veröffentlichungstag und Bekanntmachung des Hinweises auf die Patenterteilung: **01.12.2021**
(21) Anmeldenummer: 16180679.9
(22) Anmeldetag: 22.07.2016
(51) Int. Cl.: A01G 7/04, A01G 9/24

(54) **PFLANZEN-AUFZUCHTSCHRANK**
PLANT CULTIVATION CABINET
ARMOIRE DE CULTURE DE PLANTES

(30) Priorität: 30.07.2015 DE 102015112568
(43) Veröffentlichungstag der Anmeldung: 08.03.2017
(73) Patentinhaber: Mööx GmbH, 80337 München (DE)
(72) Erfinder: Frost, Philipp, 81543 München (DE)
(74) Vertreter: Rothkopf, Ferdinand

(56) Entgegenhaltungen:
- WO-A1-2008/047275
- WO-A1-2013/157943
- CN-A- 102 754 573
- CN-A- 103 098 693
- CN-A- 103 416 292
- CN-A- 103 733 971
- CN-A- 103 999 756
- DE-A1- 10 107 654
- DE-A1-102007 033 923
- DE-U1-202004 006 822
- DE-U1-202004 007 634
- FR-A1- 3 014 639
- JP-A- S59 115 924
- US-A1- 2014 318 012

## Beschreibung

### Hintergrund der Erfindung

Die Erfindung betrifft einen Pflanzen-Aufzuchtschrank mit einem Schrankkorpus, mindestens einer Schranktüre und einer in dem Schrankkorpus angeordneten Beleuchtung.

Ein solcher Pflanzen-Aufzuchtschrank wird insbesondere für Labors und Versuchsanstalten verwendet, um darin Pflanzen kontrolliert aufzuziehen. Der Pflanzen-Aufzuchtschrank weist meist eine Beleuchtung und eine Belüftung sowie ggf. eine Bewässerung für die darin untergebrachten Pflanzen auf. Der Pflanzen-Aufzuchtschrank ist dabei meist ein geschlossener Raum, der mittels einer Türe zu öffnen ist. Die Beleuchtung in dem geschlossenen Raum dient dazu, um die sich darin befindenden Pflanzen mit einer angemessenen Lichteinstrahlung zu versorgen. Die Belüftung ist dazu vorgesehen, um die Pflanzen im Pflanzen-Aufzuchtschrank ferner mit Luft zu versorgen. Dabei wird von der Belüftung in der Regel Luft von außerhalb des Pflanzen-Aufzuchtschrankes in diesen hinein ansaugt. Diese Luft wird dann durch den Pflanzen-Aufzuchtschrank hindurch transportiert und dann wieder nach außerhalb transportiert. Außer der Luft und dem Licht, benötigen die Pflanzen im Pflanzen-Aufzuchtschrank auch Wasser. Dieses Wasser wird mittels der Bewässerung an die Pflanzen kontrolliert zugeführt.

Aus DE 10 2007 033 923 A1 ist ein Pflanzen-Aufzuchtschrank mit einem Gehäuse als Schrankkorpus und zwei Schranktüren bekannt, der luftdicht geschlossen ausgeführt ist und bei beständigem Unterdruck nur mit dosierter Zuluft und mit einer verwirbelungsfreien Luftführung bei Öffnung betrieben wird. Ferner ist die sichere Entsorgung der Pflanzenreste dadurch gewährleistet, dass ein Aufzucht-Boden in eine Folienwanne eingebracht ist.

Aus DE 20 2004 006 822 U1 ist ein Schrank zur beschleunigten Pflanzenzucht bekannt, der einen Schrankkorpus und eine Schranktür umfasst. Zudem ist im Kopfbereich des Schrankes in dessen Innenraum eine Natriumdampf-Hochdrucklampe als Beleuchtung vorgesehen. Oberhalb der derartigen Lampe ist ein gewölbter Reflektor angeordnet, der das gesamte Licht nach unten wirft.

### Zugrundeliegende Aufgabe

Der Erfindung liegt die Aufgabe zugrunde, einen Pflanzen-Aufzuchtschrank zu erzeugen, der möglichst einfach zu bedienen bzw. benutzerfreundlich ist.

### Erfindungsgemäße Lösung

Diese Aufgabe ist erfindungsgemäß mit einem Pflanzen-Aufzuchtschrank mit einem Schrankkorpus und mindestens einer Schranktüre und einer in dem Schrankkorpus angeordneten Beleuchtung gelöst, bei dem in dem Schrankkorpus zwischen der Beleuchtung und der mindestens einen Schranktüre eine Lichtblende angeordnet ist, wobei die Lichtblende mit einem nur teilweise lichtdurchlässigen Material gestaltet ist.

Bei einem herkömmlichen Pflanzen-Aufzuchtschrank kann es vorkommen, dass bei einem Öffnen des Pflanzen-Aufzuchtschranks ein Benutzer dieses Pflanzen-Aufzuchtschranks geblendet wird. Bei einem erfindungsgemäßen Pflanzen-Aufzuchtschrank ist hingegen zwischen der Beleuchtung und der mindestens einen Schranktüre eine Lichtblende angebracht. Mittels dieser Lichtblende wird, wenn die Schranktür geöffnet wird, das von der Beleuchtung ausgestrahlte Licht abgeschirmt. Auch im geöffneten Zustand sind dann die Augen des Benutzers von den Lichtstrahlen der Beleuchtung abgeschirmt. Ein derartiger Pflanzen-Aufzuchtschrank ist, so hat sich erfindungsgemäß gezeigt, besonders für jene Benutzer von Vorteil, die den Pflanzen-Aufzuchtschrank häufig zum Begutachten von darin befindlichen Pflanzen öffnen. Vorzugsweise ist die Lichtblende in einem oberen Abschnitt des Schrankkorpus angeordnet. Die derartige Anordnung der Lichtblende im oberen Abschnitt ermöglicht zusätzlich zu einer verminderten Blendung des Benutzers auch, dass damit Bauteile oder Leitungen verdeckt werden können, welche in diesem Bereich angeordnet sind. Der Pflanzen-Aufzuchtschrank erhält dadurch auch ein wertigeres, professionelles Aussehen.

Erfindungsgemäß ist die Lichtblende mit einem nur teilweise lichtdurchlässigen Material gestaltet. Eine solche Lichtblende hält Licht teilweise zurück, lässt es aber auch teilweise durch. Ein Benutzer kann dann besser erkennen, ob die sich hinter der Lichtblende befindende Beleuchtung leuchtet oder nicht. Insbesondere ist die Lichtblende mit einem reflektierenden Material gestaltet. Dieses reflektierende Material befindet sich dabei besonders bevorzugt an der den Pflanzen zugewandten Seite der Lichtblende. Das reflektierende Material wirft das darauf auftreffende Licht je nach Einfallwinkel mit einem Reflektionswinkel zurück. Das von der Beleuchtung zur Lichtblende abgestrahlte Licht kann so ganz gezielt in den Schrankkorpus zurückreflektiert werden. Es wird dann also ein Blenden des Benutzers verhindert und zusätzlich steht den Pflanzen im Pflanzen-Aufzuchtschrank zusätzlich Licht für ihr Wachstum zur Verfügung.

Bevorzugt ist ferner in dem Schrankkorpus ein dort angeordneter Lüfter mittels einer Halterung höhenverstellbar befestigt. Der Lüfter generiert einen Luftstrom, der dafür sorgt, dass die in den Schrankkorpus zugeführte Luft sich dort gleichmäßig verteilt bzw. umwälzt. Dadurch dass der Lüfter mittels einer Halterung höhenverstellbar ist, kann der Luftstrom je nach Begebenheit der Pflanzen angepasst werden. Mit der derartigen Höhenverstellung des Lüfters kann der Luftstrom insbesondere auf verschiedene Wuchsstadien der Pflanzen und der dabei unterschiedlichen Größe dieser Pflanzen angepasst werden. Die Pflanzen innerhalb des Schrankkorpus können somit insbesondere gleichmäßig und fortwährend mit neuem Sauerstoff und Stickstoff aus der Luft versorgt werden. Dies fördert ein gleichmäßiges, effizientes Pflanzenwachstum.

In vorteilhafter Weise ist die Halterung mit mehreren Raststufen zum dortigen Einrasten des Lüfters gestaltet. Die Raststufen in der Halterung ermöglichen ein stufenweises Verstellen des Lüfters. So kann auf einfache Weise durch ein Markieren oder ein Abzählen der Raststufen, der Lüfter an vordefinierten Orten platziert und diese Platzierung dann auch nachvollziehbar dokumentiert werden. Insbesondere für Labore oder Versuchsanstalten ist eine solche Reproduzierbarkeit und Dokumentation von Wuchsparametern der Pflanzen von Bedeutung.

Besonders bevorzugt ist bei dem erfindungsgemäßen Pflanzen-Aufzuchtschrank zwischen dem Schrankkorpus und der mindestens einen Schranktüre ein Klemmschutz angeordnet. Ein solcher Klemmschutz verhindert, dass sich Objekte wie beispielsweise ein Kabel, ein Teil einer Pflanze oder gar ein Finger des Benutzers zwischen dem Schrankkorpus und der dazugehörenden Schranktüre einklemmen kann. Insbesondere wenn mehrere Benutzer an dem erfindungsgemäßen Pflanzen-Aufzuchtschrank arbeiten, kann dies Verletzungen an den Pflanzen oder gar bei den Benutzern verhindern. Der Klemmschutz verringert also eine Gefahr einer Verletzung der Benutzer sowie einer Beschädigung der Pflanzen oder des Pflanzen-Aufzuchtschranks.

In bevorzugter Weise ist der Klemmschutz mit einem sich vom Schrankkorpus zur mindestens einen Schranktüre erstreckenden, elastischen Flächenelement gestaltet. Wenn etwas elastisch ist bzw. Elastizität aufweist, hat es die Eigenschaft unter Krafteinwirkung, wie etwa einem Öffnen der Schranktüre, seine Form zu verändern und nachfolgend bei einem Nachlassen der Krafteinwirkung, wie etwa bei einem Schließen der Schranktüre, in die Ursprungsform zurückzukehren. Mit dieser Art von Klemmschutz muss nun der Benutzer des Pflanzen-Aufzuchtschranks nicht mehr darauf achten, ob sich beim Schließen Pflanzenteile oder ähnliches zwischen dem Schrankkorpus und der Schranktüre, insbesondere in einem Scharnierbereich der Schranktüre, befinden. Das derartige, erfindungsgemäß bevorzugte Flächenelement deckt dabei vorzugsweise nahezu vollständig einen durch das Öffnen verursachten Spalt zwischen der Schranktüre und dem Schrankkorpus ab. Der Klemmschutz wirkt dann über die gesamte Höhe der Schranktüre hinweg.

Erfindungsgemäß bevorzugt ist in dem Schrankkorpus des erfindungsgemäßen Pflanzen-Aufzuchtschrankes ferner mindestens eine herausziehbare Schublade zum Aufnehmen mindestens eines Pflanztopfes angeordnet. Die herausziehbare Schublade kann der Benutzer des Pflanzen-Aufzuchtschrankes zusammen mit einem sich darauf bzw. darin befindenden Pflanztopf aus dem Schrankkorpus herausziehen. Für den Benutzer ist es so möglich, die Pflanzen in den Pflanztöpfen von oben zu begutachten und zu bearbeiten, ohne in den Schrankkorpus hineingreifen zu müssen. Besonders bei Laboren oder Versuchsanstalten ist es wichtig, dass die Pflanzen so von fast allen Seiten begutachtet werden können.

Besonders bevorzugt ist die herausziehbare Schublade mit einer fluiddichten Sammelwanne gestaltet. In dieser fluiddichten Sammelwanne kann ein Fluid gesammelt und insbesondere auch zurückgehalten werden. Als Fluid wird bei Pflanzen-Aufzuchtschränken meist Wasser, Wasser mit Zusätzen, wie Düngemittel oder Nährlösungen zur Versorgung der Pflanzen verwendet. Von den Pflanzen nicht aufgenommenes Fluid wird dann von der Sammelwanne gesammelt. Das Fluid in der Sammelwanne kann auch wiederverwendet und den Pflanzen wieder zugeführt werden.

In vorteilhafter Weise ist ferner an der mindestens einen Schranktüre eine Lade, insbesondere zum Aufnehmen mindestens eines Pflanztopfes, angeordnet. Die Lade kann zur Aufbewahrung von Gegenständen, wie etwa Werkzeugen dienen. Mittels der Lade können so auch zu dem jeweiligen Pflanzen-Aufzuchtschrank zugehörende Instrumente zugeordnet werden. Ferner kann dort, insbesondere zusätzlich zu der Schublade, mindestens ein Pflanztopf aufbewahrt sein. Mit der Lade können auch Pflanzen im Pflanzen-Aufzuchtschrank unterschiedlich geordnet werden. Zum Beispiel können dort junge Pflanzen von älteren Pflanzen getrennt werden. Besonders vorteilhaft ist dabei, dass die jungen Pflanzen so bereits in der gleichen Wuchsumgebung wie die älteren Pflanzen vorgehalten sind.

Ferner ist in bevorzugter Weise die mindestens eine Schranktüre mit einer Scheibe, insbesondere einer Glasscheibe, gebildet. Die Scheibe ermöglicht es, dass der Pflanzen-Aufzuchtschrank von außen eingesehen werden kann. So ist es möglich das Wachstum der Pflanzen zu überwachen, ohne den Pflanzen-Aufzuchtschrank öffnen zu müssen. Außerdem kann der Pflanzen-Aufzuchtschrank mit seiner Scheibe in der Schranktüre derart platziert werden, dass von außen Sonnenlicht in den Schrank fällt. So kann dann gegebenenfalls bei Sonnenschein auf eine Beleuchtung verzichtet und Energie gespart werden. Insbesondere bei lichtarmen bzw. lichtschwachen Tagen kann zwischen einem beleuchteten und unbeleuchteten Betrieb gewechselt werden.

### Kurzbeschreibung der Zeichnungen

Nachfolgend wird ein Ausführungsbeispiel der erfindungsgemäßen Lösung anhand der beigefügten schematischen Zeichnungen näher erläutert. Es zeigt:
- Fig. 1: eine Außenansicht eines erfindungsgemäßen Pflanzen-Aufzuchtschranks,
- Fig. 2: eine Sicht in einen Pflanzen-Aufzuchtschrank gemäß Fig. 1, und
- Fig. 3: eine Detailansicht einer geöffneten Schranktüre eines Pflanzen-Aufzuchtschranks gemäß Fig. 1.

### Detaillierte Beschreibung des Ausführungsbeispiels

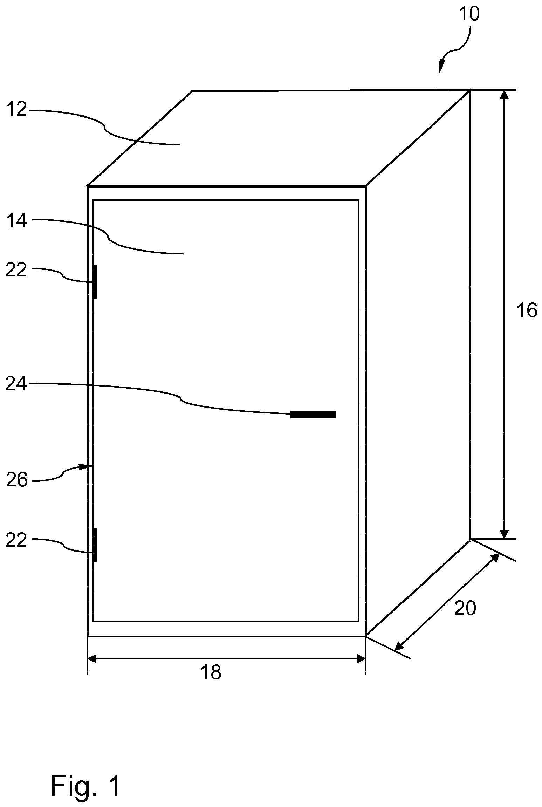

Die Fig. 1 zeigt einen Pflanzen-Aufzuchtschrank 10 mit einem quaderförmigen, hohlen Schrankkorpus 12 und einer darin vorne eingebetteten Schranktüre 14. Der Schrankkorpus 12 weist eine Höhe 16, eine Breite 18 und eine Tiefe 20 auf.

Die Schanktüre 14 ist mittels eines Scharniers 22 an dem Schrankkorpus 12 schwenkbar gelagert. Das Scharnier 22 ist so ausgebildet, dass mit einer Drehbewegung um das Scharnier 22 ein vollständiges Öffnen der Schranktüre 14 ermöglicht ist. Insbesondere sind vorliegend zwei Scharniere 22 übereinander vorgesehen. Alternativ können auch bezogen auf die Breite 18 links und rechts Scharniere 22 vorgesehen sein, von denen dann nur auf einer Seite Scharniere 22 in Funktion gesetzt sind, so dass je nach gewünschter Öffnungsrichtung der Schranktüre 14 diese Schranktüre 14 mit dem Schrankkorpus 12 verbunden ist.

An der Schranktüre 14 den Scharnieren 22 gegenüberliegend ist ein Griff 24 vorgesehen. Mittels des Griffes 24 und einem damit verbundenen, hier nicht dargestelltem Schloss ist die Schranktüre 14 mit dem Schrankkorpus 12 wahlweise zu verriegeln. Zwischen der Schranktüre 14 und dem Schrankkorpus 12 ist ein umlaufendes Dichtelement 26 eingefügt. Dieses Dichtelement 26 dichtet die Schranktüre 14 ab und verhindert, dass Emissionen, wie beispielhaft Gerüche oder Licht, unkontrolliert aus dem Pflanzen-Aufzuchtschrank 10 entweichen könnten.

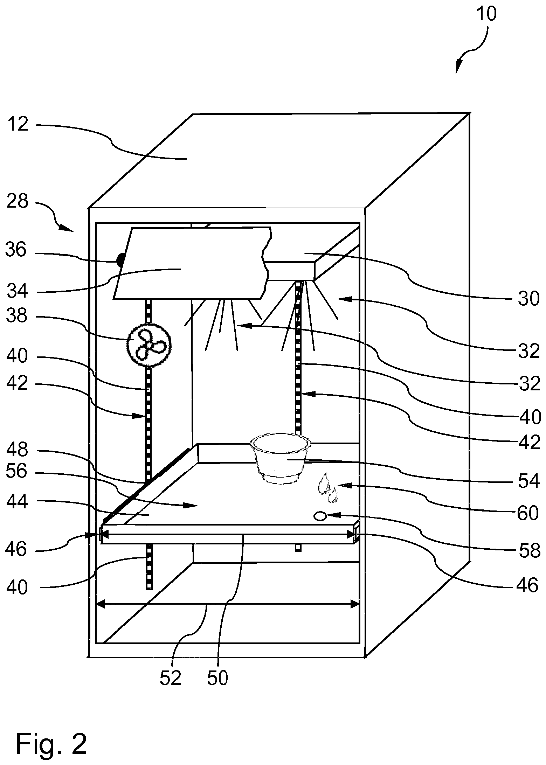

Die Fig. 2 zeigt den geöffneten Pflanzen-Aufzuchtschrank 10. In dem Pflanzen-Aufzuchtschrank 10 ist in dem Schrankkorpus 12 in einem auf die Höhe 16 bezogenen oberen Abschnitt 28 eine Beleuchtung 30 mit einer hier nicht dargestellten Lichtquelle in Form einer LED-Lampe angeordnet, die Lichtstrahlen 32 des roten und blauen Lichtspektrums emittiert. Zwischen der Beleuchtung 24 und der (in der Fig. 2 nicht dargestellten Schranktüre 14) ist eine Lichtblende 34 vorgesehen, die mittels eines verstellbaren Befestigungselements 36 mit dem Schrankkorpus 12 verbunden ist. Diese Lichtblende 34 im oberen Abschnitt 28 schirmt die Lichtstrahlen 32 von einem hier nicht dargestellten Benutzer ab. Der Benutzer blickt also nicht direkt in die Lichtquelle, sondern blickt auf die Lichtblende 34. Die Lichtblende 34 ist dabei mit dem Befestigungselement 36 so an dem Schrankkorpus 12 befestigt, dass das Befestigungselement 36 es ermöglicht, die Lichtblende 34 um die Befestigungselemente zu schwenken und so vorne in der Höhe zu verstellen.

Im Schrankkorpus 12 sind ferner im oberen Abschnitt 28 hier nicht dargestellte Versorgungselemente bzw. Befestigungselemente vorgesehen. Diese Elemente werden ebenfalls mittels der Lichtblende 34 verdeckt.

Innerhalb des Schrankkorpus 12 ist ein Lüfter 38 angeordnet, der an einer Halterung 40 befestigt ist. Die Halterung 40 ist ortsfest mit dem Schrankkorpus verbunden und erstreckt sich über fast die gesamte Höhe 16 des Schrankkorpusses 12. Besonders bevorzugt sind drei Halterungen 40 an den drei Innenseiten des Schrankkorpusses 12 angeordnet. Die jeweilige Halterung 40 weist dabei Raststufen 42 auf. Mittels der Raststufen 42 ist der Lüfter 38 in seiner Lage entlang der Halterung 40 in Stufen verstellbar. Der Lüfter 38 ist somit innerhalb des Schranckorpus 12 so anzuordnen, dass der Lüfter 38 den jeweils gewünschten Luftstrom im Pflanzen-Aufzuchtschrank 10 generiert.

Den Pflanzen-Aufzuchtschrank 10 in seiner Höhe 16 unterteilend, ist eine rechteckige, wannenförmige Schublade 44 mittels zweier Auszügen 46 an dem Schrankkorpus 12 angekoppelt. Die Auszüge 46 sind an zwei gegenüberliegenden Längsseiten der Schublade 44 befestigt und weisen in Auszugrichtung zu der hier nicht dargestellten Schranktüre 14. Zwischen den Auszügen 46 und dem Schrankkorpus 12 sind Abstandshalter 48 angeordnet. Diese Abstandshalter 48 ermöglichen, dass eine Breite 50 der Schublade 44 mit ihren Auszügen 46 geringer ist, als eine Breite 52 der Türöffnung. Insbesondere sind die Auszüge 46 so gestaltet, das sie ein vollständiges Herausziehen der Schublade 44 aus dem Schrankkorpus 12 ermöglichen.

Die Schublade 44 kann mittels hier nicht dargestellter Befestigungselemente in der Höhe 16 in dem Schrankkorpus 12 variabel verstellt werden. Somit besteht auch die Möglichkeit, mehrere Schubladen 44 in den Pflanzen-Aufzuchtschrank 10 anzuordnen oder die Höhenlage der Schublade 44 an die Wuchshöhe der dortigen Pflanzen anzupassen.

Auf bzw. in der Schublade 44 befindet sich eine fluiddichte Sammelwanne 56, in die hinein ein Pflanztopf 54 gestellt ist. Alternativ kann auch die Schublade 44 zugleich als Sammelwanne 56 ausgebildet sein. Die Sammelwanne 56 bzw. die Schublade 44 ist mit einer bodenseitigen Öffnung 58 mit einem hier nicht dargestellten Verschluss versehen. Ein Fluid 60, wie etwa Gießwasser, das von einer Pflanze im Pflanztopf 54 nicht aufgenommen wurde, sammelt sich in der Sammelwanne 56. Um dieses Fluid 60 aus der Sammelwanne 56 abzuführen, kann es durch die Öffnung 58 abgeleitet werden.

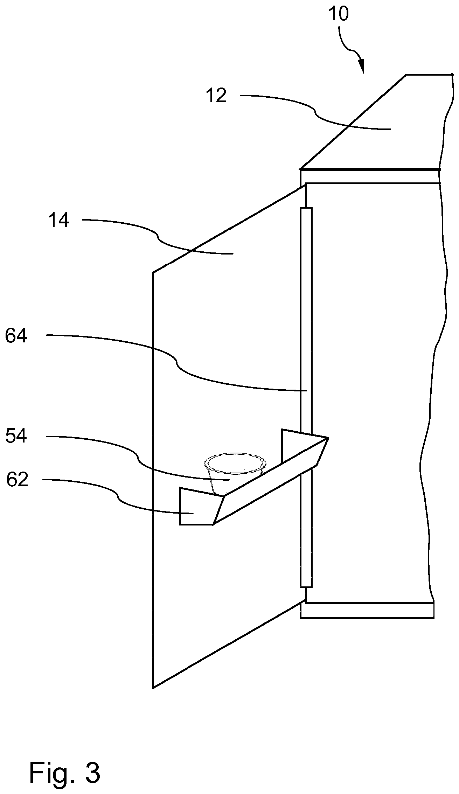

Fig. 3 zeigt die geöffnete Schranktüre 14 eines Pflanzen-Aufzuchtschrank 10 mit einer dort ortsfest angebrachten Lade 62 und mit einem dortigen, innenseitigen Klemmschutz 64 zwischen der Schranktüre 14 und dem Schrankkorpus 12.

Die Lade 62 an der Schranktüre 14 ist zum Aufbewahren von beispielsweise einem Pflanztopf 54 oder von Werkzeug vorgesehen. Die Länge und die Breite der Lade 62 ist so gestaltet, dass die Lade 62 bei einem Schwenken um das Scharnier 22 durch die Türöffnung hindurchtreten kann.

Eine Seite des Klemmschutzes 64 ist an der Innenseite des Schrankkorpus 12 angebracht, die andere Seite des Klemmschutzes 64 ist an der Innenseite der Schranktüre 14 befestigt. Der Klemmschutz 64 selbst ist aus einem elastischen, flächigen Material, insbesondere aus einem Gewebe gestaltet.

In einer hier nicht dargestellten Ausführungsform ist die Schranktüre 14 mit einer Scheibe versehen. Die Schranktüre 14 ist dann insbesondere mit einem Rahmen ausgebildet, in den die Scheibe eingesetzt ist.

### Bezugszeichenliste

- 10: Pflanzen-Aufzuchtschrank
- 12: Schrankkorpus
- 14: Schranktüre
- 16: Höhe
- 18: Breite
- 20: Tiefe
- 22: Scharnier
- 24: Griff
- 26: Dichtelement
- 28: oberer Abschnitt
- 30: Beleuchtung (nicht dargestellter Lichtquelle)
- 32: Lichtstrahlen
- 34: Lichtblende
- 36: Befestigungselement
- 38: Lüfter
- 40: Halterung
- 42: Raststufen
- 44: Schublade
- 46: Auszug
- 48: Abstandshalter
- 50: Breite
- 52: Breite
- 54: Pflanztopf
- 56: Sammelwanne
- 58: Öffnung
- 60: Fluid
- 62: Lade
- 64: Klemmschutz

## Patentansprüche

1. Pflanzen-Aufzuchtschrank (10) mit einem Schrankkorpus (12) und mindestens einer Schranktüre (14) und einer in dem Schrankkorpus (12) angeordneten Beleuchtung (30),
**dadurch gekennzeichnet, dass** in dem Schrankkorpus (12) zwischen der Beleuchtung (30) und der mindestens einen Schranktüre (14) eine Lichtblende (34) angeordnet ist, wobei die Lichtblende mit einem nur teilweise lichtdurchlässigen Material gestaltet ist.

2. Pflanzen-Aufzuchtschrank nach Anspruch 1,
**dadurch gekennzeichnet, dass** die Lichtblende (34) mit einem reflektierendem Material gestaltet ist.

3. Pflanzen-Aufzuchtschrank nach Anspruch 1 oder 2 mit einem in dem Schrankkorpus (12) angeordneten Lüfter (38),
**dadurch gekennzeichnet, dass** der Lüfter (38) mittels einer Halterung (40) höhenverstellbar befestigt ist.

4. Pflanzen-Aufzuchtschrank nach Anspruch 3,
**dadurch gekennzeichnet, dass** die Halterung (40) mit mehreren Raststufen (42) zum dortigen Einrasten des Lüfters (38) gestaltet ist.

5. Pflanzen-Aufzuchtschrank nach einem der Ansprüche 1 bis 4,
**dadurch gekennzeichnet, dass** zwischen dem Schrankkorpus (12) und der mindestens einen Schranktüre (14) ein Klemmschutz (64) angeordnet ist.

6. Pflanzen-Aufzuchtschrank nach Anspruch 5,
**dadurch gekennzeichnet, dass** der Klemmschutz (64) mit einem sich vom Schrankkorpus (12) zur mindestens einen Schranktüre (14) erstreckenden, elastischen Flächenelement gestaltet ist.

7. Pflanzen-Aufzuchtschrank nach einem der Ansprüche 1 bis 6,
**dadurch gekennzeichnet, dass** in dem Schrankkorpus (12) mindestens eine herausziehbare Schublade (44) zum Aufnehmen mindestens eines Pflanztopfes (54) angeordnet ist.

8. Pflanzen-Aufzuchtschrank nach Anspruch 7,
**dadurch gekennzeichnet, dass** die herausziehbare Schublade (44) mit einer Sammelwanne (56), insbesondere zum Aufnehmen von Fluid (60), gestaltet ist.

9. Pflanzen-Aufzuchtschrank nach einem der Ansprüche 1 bis 8,
**dadurch gekennzeichnet, dass** an der mindestens einen Schranktüre (12) eine Lade (62), insbesondere zum Aufnehmen mindestens eines Pflanztopfes (54), angeordnet ist.

10. Pflanzen-Aufzuchtschrank nach einem der Ansprüche 1 bis 9,
**dadurch gekennzeichnet, dass** die mindestens eine Schranktüre (14) mit einer Scheibe, insbesondere einer Glasscheibe, gebildet ist.

## Claims

1. Plant cultivation cabinet (10) having a cabinet body (12) and at least one cabinet door (14) and a lighting system (30) arranged in the cabinet body (12), **characterised in that** a light shield (34) is arranged in the cabinet body (12) between the lighting system (30) and the at least one cabinet door (14), wherein the light shield is made of a material that is only partly transparent.

2. Plant cultivation cabinet according to claim 1,
**characterised in that** the light shield (34) is made of a reflective material.

3. Plant cultivation cabinet according to claim 1 or 2 having a fan (38) arranged in the cabinet body (12),
**characterised in that** the fan (38) is fastened so as to be vertically adjustable by means of a mount (40).

4. Plant cultivation cabinet according to claim 3,
**characterised in that** the mount (40) is configured with multiple stops (42) for locking the fan (38) therein.

5. Plant cultivation cabinet according to any one of claims 1 to 4,
**characterised in that** an anti-trap guard (64) is arranged between the cabinet body (12) and the at least one cabinet door (14).

6. Plant cultivation cabinet according to claim 5,
**characterised in that** the anti-trap guard (64) is configured with a resilient planar element which extends from the cabinet body (12) to the at least one cabinet door (14).

7. Plant cultivation cabinet according to any one of claims 1 to 6,
**characterised in that** at least one removable tray (44) for holding at least one plant pot (54) is arranged in the cabinet body (12).

8. Plant cultivation cabinet according to claim 7,
**characterised in that** the removable tray (44) is configured with a collecting trough (56), in particular for holding fluid (60).

9. Plant cultivation cabinet according to any one of claims 1 to 8,
**characterised in that** a receptacle (62), in particular for holding at least one plant pot (54), is arranged on the at least one cabinet door (14).

10. Plant cultivation cabinet according to any one of claims 1 to 9,
**characterised in that** the at least one cabinet door (14) is formed with a pane, in particular a pane of glass.

## Revendications

1. Armoire de culture de plantes (10) avec un corps d'armoire (12) et au moins une porte d'armoire (14) et un éclairage (30) disposé dans le corps d'armoire (12), **caractérisée en ce qu'**un cache-lumière (34) est disposé dans le corps d'armoire (12) entre l'éclairage (30) et l'au moins une porte d'armoire (14), le cache-lumière étant réalisé avec une matière seulement en partie translucide.

2. Armoire de culture de plantes selon la revendication 1, **caractérisée en ce que** le cache-lumière (34) est réalisé avec une matière réfléchissante.

3. Armoire de culture de plantes selon la revendication 1 ou 2 avec un ventilateur (38) disposé dans le corps d'armoire (12), **caractérisée en ce que** le ventilateur (38) est fixé de façon réglable en hauteur au moyen d'une fixation (40).

4. Armoire de culture de plantes selon la revendication 3, **caractérisée en ce que** la fixation (40) est réalisée avec plusieurs niveaux d'encliquetage (42) afin d'encliqueter sur place le ventilateur (38).

5. Armoire de culture de plantes selon l'une quelconque des revendications 1 à 4, **caractérisée en ce qu'**une protection anti-coincement (64) est disposée entre le corps d'armoire (12) et l'au moins une porte d'armoire (14).

6. Armoire de culture de plantes selon la revendication 5, **caractérisée en ce que** la protection anti-coincement (64) est réalisée avec un élément de surface élastique s'étendant depuis le corps d'armoire (12) jusqu'à au moins une porte d'armoire (14).

7. Armoire de culture de plantes selon l'une quelconque des revendications 1 à 6, **caractérisée en ce qu'**au moins un tiroir (44) amovible est disposé dans le corps d'armoire (12) pour recevoir au moins un pot de plante (54).

8. Armoire de culture de plantes selon la revendication 7, **caractérisée en ce que** le tiroir (44) amovible est réalisé avec un bac de collecte (56), notamment pour recevoir du liquide (60).

9. Armoire de culture de plantes selon l'une quelconque des revendications 1 à 8, **caractérisée en ce qu'**un battant (62) est disposé au niveau de l'au moins une porte d'armoire (14), notamment pour recevoir au moins un pot de plante (54).

10. Armoire de culture de plantes selon l'une quelconque des revendications 1 à 9, **caractérisée en ce que** l'au moins une porte d'armoire (14) est formée avec une vitre, notamment une vitre en verre.
